# EUROPÄISCHE PATENTSCHRIFT

(11) **EP 2 057 474 B1**
(45) Veröffentlichungstag und Bekanntmachung des Hinweises auf die Patenterteilung: **10.05.2017**
(21) Anmeldenummer: 07802674.7
(22) Anmeldetag: 17.08.2007
(51) Int. Cl.: G01P 3/489, G01P 21/02, G01D 18/00, G01D 3/08

(54) **AKTIVER SENSOR MIT BETRIEBSMODUS-UMSCHALTUNG**
ACTIVE SENSOR WITH OPERATING MODE CHANGEOVER
CAPTEUR ACTIF AVEC COMMUTATION DU MODE DE FONCTIONNEMENT

(30) Priorität: 21.08.2006 DE 102006038970; 09.06.2007 DE 102007026786
(43) Veröffentlichungstag der Anmeldung: 13.05.2009
(73) Patentinhaber: Continental Teves AG & Co. OHG, 60488 Frankfurt (DE)
(72) Erfinder: JÖCKEL, Wolfgang, 36129 Gersfeld (DE); ECKRICH, Jörg, 65201 Wiesbaden (DE); FRITZ, Wolfgang, 35440 Grossen-Linden (DE); DIETZ, Timo, 65239 Hochheim am Main (DE); KLAUSEN, Ralf, 60314 Frankfurt Am Main (DE)
(74) Vertreter: Beck, Jörg
(86) Internationale Anmeldenummer: PCT/EP2007/058554
(87) Internationale Veröffentlichungsnummer: WO 2008/022968

(56) Entgegenhaltungen:
- DE-A1- 4 434 978
- DE-A1- 10 203 483
- JP-A- 11 045 384
- US-B1- 6 867 581

## Beschreibung

Die Erfindung betrifft einen aktiven Sensor gemäß Oberbegriff von Anspruch 1, ein Verfahren zur Ansteuerung eines aktiven Sensors gemäß Oberbegriff von Anspruch 14 und die Verwendung des aktiven Sensors in Kraftfahrzeugen.

In Druckschrift DE 44 34 978 A1 wird ein aktiver Sensor mit einer Zwei-Draht-Schnittstelle beschrieben, der einen Testmodus zur Erfassung einer kritischen Luftspaltlänge zwischen Sensor und Encoder aufweist, wobei zwischen dem normalen Betriebsmodus und diesem Testmodus durch Veränderung der Betriebsspannung umgeschaltet werden kann indem der Sensor mit einem seriellen Spannungs-Bit-Muster angesteuert wird. Druckschrift DE 102 03 483 A1 schlägt einen Raddrehzahlsensor vor, der in unterschiedlichen Modi betrieben werden kann bzw. unterschiedliche Modi der Datenübertragung aufweist, wobei zwischen diesen Betriebsmodi durch eine externe Ansteuerung mittels eines zusätzlichen Eingangs umgeschaltet werden kann.

Dokument US 6,867,581 B1, offenbart einen Sensor mit einem Sensorelement und einer Auswerteschaltung, welcher durch Umpolen in einen anderen Betriebsmodus versetzt werden kann. Die Sensorausgangssignale werden allerdings über einen zusätzlichen pin 12 ausgegeben und nicht über die Anschlussleitungen, an denen umgepolt wird und an denen die Versorgungsspannung anliegt, übertragen.

Dokument JP11045384A beschreibt einen Feuersensor, mit einem Sensorelement, der aber keine Auswerteschaltung im Sensorteil 2 aufweist. Mittels Umpolen der Spannung an den beiden Anschlussleitungen des Sensorteils 2 kann der Sensor hinsichtlich seines Betriebsmodus umgeschaltet werden. Ein elektrisches Signal, das die Information über den Innenwiderstand des Sensorelements umfasst, wird ebenfalls über die beiden Anschlussleitungen des Sensorteils 2 zum Signalverarbeitungsteil 1 übertragen. Die Erfindung hat sich die Aufgabe gestellt einen aktiven Sensor vorzuschlagen, welcher zusätzlich zum normalen Betriebsmodus mindestens einen zweiten Betriebsmodus aufweist und zwischen diesen Betriebsmodi umschaltbar ist. Dabei soll insbesondere eine einfache und zuverlässige Art der Ansteuerung für die Betriebsmodusumschaltung möglich sein.

Die Aufgabe wird erfindungsgemäß gelöst durch den aktiven Sensor gemäß Anspruch 1 und das Verfahren gemäß Anspruch 14.

Der Erfindung liegt der Gedanke zu Grunde, einen aktiven Sensor mit Betriebsmodus-Umschaltung vorzuschlagen, wobei die Umschaltung des Betriebsmodus durch Umpolen der Versorgungsspannung erfolgt bzw. der Sensor für eine solche Ansteuerung zur Betriebsmodusumschaltung ausgelegt ist.

Durch die mindestens zwei Betriebsmodi und deren Umschaltung mittels Umpolen der Versorgungsspannung kann mit dem erfindungsgemäßen Sensor insbesondere sowohl eine Unterspannungserkennung als auch ein Testmodus realisiert werden.

Die Ansteuerung des Sensors zur Betriebsmodusumschaltung mittels des Umpolens der Versorgungsspannung ist eine besonders zuverlässig erkennbare und einfache Ansteuerung. Das Risiko, dass diese Art der Ansteuerung unerwünschterweise, beispielsweise durch Einkopplung eines Störsignals, im Betrieb durchgeführt wird, ist gering.

Unter einem Sensorelement wird vorzugsweise ein Magnetfeldsensorelement verstanden, welches auf Basis des Hall-Effektes oder eines der verschiedenen magnetoresistiven Effekte, insbesondere des anisotropen magnetoresistiven Effektes, funktioniert.

Der Sensor kann zumindest in einem Normalbetriebsmodus und einem Sonderbetriebsmodus betrieben werden. Diese Betriebsmodi weisen bevorzugt weitere Unterbetriebsmodi auf. Insbesondere umfasst der Sensor Umschaltmittel mit denen durch Umschaltung zwischen Unterbetriebsmodi eine Änderung der Zuordnung von Zusatzinformationen zu definierten Übertragungskanälen des Sensorausgangssignals vorgenommen werden kann, besonders bevorzugt wie eine Sensoranordnung bzw. ein entsprechendes Ausführungsbeispiel gemäß Druckschrift DE 102 03 483 A1. Ganz besonders bevorzugt wird eine Umschaltung zwischen Unterbetriebsmodi in Abhängigkeit vom Betriebszustand des Sensors und/oder in Abhängigkeit definierter, besonders bevorzugt durch den Sensor erfasster, Parameter durchgeführt.

Unter einem Normalbetriebsmodus des Sensors wird zweckmäßigerweise der Betrieb verstanden, in welchem die wenigstens eine bestimmungsgemäße Messgröße durch den Sensor erfasst und verarbeitet wird und insbesondere im Wesentlichen störungsfrei, als Messwert, enthalten in einem Sensorausgangsignal, bereitgestellt wird. Im Normalbetriebsmodus bzw. im normalen Betrieb des Sensors ist die Versorgungsspannung mit vorgesehener Polung an diesen angeschlossen, also "+" an "+" und "-" an "-". Besonders bevorzugt ist der Normalbetriebsmodus des Sensors dadurch definiert, dass eine definierte Mindestversorgungsspannung dem Sensor zur Verfügung steht, ganz besonders bevorzugt eine Versorgungs- bzw. Arbeitsspannung zwischen im Wesentlichen 4V und 28V.

Vorzugsweise wird das Ausgangssignal des Sensors an eine elektronische Kontrolleinheit, insbesondere eine elektronische Kontrolleinheit eines Kraftfahrzeugregelungssystems, übertragen.

Es ist zweckmäßig, dass der Sensor so ausgelegt ist, dass die Umschaltung des Betriebsmodus, insbesondere aufgrund einer Ansteuerung an den Anschlussleitungen, automatisch durchgeführt wird.

Das Umschaltmodul weist bevorzugt eine Gleichtrichterschaltung, insbesondere eine Brückengleichrichterschaltung auf, welche besonders bevorzugt aus vier Mos-FETs zur Vermeidung des bei Dioden auftretenden Spannungsabfalls ausgebildet ist. Die Gleichrichterschaltung ist eingangsseitig mit den beiden Anschlussleitungen des Sensors verbunden. Die Gleichrichterschaltung stellt an ihren Ausgängen auch nach Umpolen der Versorgungsspannung stets eine gleichgerichtete Spannung bereit, welche als Versorgungsspannung wenigstens bestimmter Komponenten des Sensors verwendet wird, bei denen ein Umpolen ihrer Versorgungsspannung vermieden werden muss. Die Gleichrichterschaltung hat zusätzlich die Wirkung eines allgemeinen Verpolschutzes.

Das Umschaltmodul weist zweckmäßigerweise zumindest eine erste Komparatorschaltung zur Identifikation der Polung der Versorgungsspannung des Sensors auf, wobei die erste Komparatorschaltung insbesondere eingangsseitig mit den beiden Anschlussleitungen des Sensors direkt oder indirekt, besonders bevorzugt mittels eines Spannungsteilers, verbunden ist. Alternativ vorzugsweise erfasst die erste Komparatorschaltung die Versorgungsspannung des Sensors dadurch, dass der Spannungsabfall über einem Gleichrichterbauelement, insbesondere über einer Diode oder einem Transistor der Brückengleichrichterschaltung, erfasst wird.

Die Energieversorgungsanschlüsse der ersten Komparatorschaltung und/oder der Auswerteschaltung sind vorzugsweise mit den Ausgangsanschlüssen der Gleichrichterschaltung verbunden, wodurch eine Unabhängigkeit der Energieversorgung obiger Komponenten von der Polung der Sensorversorgungsspannung erreicht wird.

Das Umschaltmodul weist zweckmäßigerweise zur Bewertung seiner eigenen Betriebsspannung und/oder der Betriebsspannung der Auswerteschaltung bezüglich wenigstens einer definierten Spannungsschwelle mindestens eine Reseteinrichtung auf, welche insbesondere im Wesentlichen als Komparatorschaltung ausgebildet ist und mit ihren Versorgungsanschlüssen an die Ausgangsklemmen der Gleichrichterschaltung angeschlossen ist. Besonders bevorzugt weist das Umschaltmodul eine erste Reseteinrichtung, welche ein mögliches Überschreiten einer definierten Spannungsschwelle erfasst, und eine zweite Reseteinrichtung auf, welche ein mögliches Unterschreiten einer definierten Spannungsschwelle erfasst. Ganz besonders bevorzugt sind diese beiden Spannungsschwellen gleich groß, wodurch eine Plausibilisierung der beiden Reseteinrichtungsausgänge ermöglicht wird.

Es ist bevorzugt, dass das Umschaltmodul eine Schalteinrichtung, insbesondere als Schalter ausgebildet, zum Umschalten des Betriebsmodus aufweist, welche in Abhängigkeit des Ausgangs der ersten Komparatorschaltung zur Identifikation der Polung der Versorgungsspannung des Sensors und in Abhängigkeit des Ausgang bzw. der Ausgänge der mindestens einen Reseteinrichtung den Betriebsmodus des Sensors umschaltet. Hierdurch kann die Auswerteschaltung sowohl in Abhängigkeit der Polung des Sensors als auch in Abhängigkeit der Versorgungsspannungsamplitude angesteuert bzw. ein interner Betriebsmodus oder Unterbetriebsmodus eingestellt werden.

Die Auswerteschaltung weist vorzugsweise eine Signalverarbeitungseinrichtung umfassend zwei Hystereseschaltungen auf, in denen ein erstes und ein zweites Ausgangssignal des wenigstens einen Sensorelements verarbeitet werden, wobei diese beiden Hystereseschaltungen parallel geschaltet sind und jeweils zumindest einen Komparator umfassen. Das erste und das zweite Ausgangssignal des mindestens einen Sensorelements liegen dabei jeweils an den Eingängen der beiden Komparatoren bezüglich des nichtinvertierenden und des invertierenden Eingangs zueinander vertauscht an. Dadurch liegt an jedem Komparator eingangsseitig die bgzl. des anderen Komparators inverse Spannungsdifferenz der beiden Ausgangssignale des wenigstens einen Sensorelements an, wodurch ein asymmetrisches Schaltverhalten der beiden Hystereseschaltungen realisiert wird. Insbesondere ist jeweils an den invertierenden Eingang der beiden Komparatoren der Hystereseschaltungen ein Spannungsteiler angeschlossen. Dieser besteht aus einem ersten und einem zweiten Widerstand an einem ersten Knotenpunkt zwischen diesen beiden Widerständen. Der erste Widerstand ist mit dem Anschluss dem ersten Knotenpunkt gegenüberliegend an die Signalleitung des entsprechenden ersten oder zweiten Ausgangssignals des wenigstens einen Sensorelements angeschlossen und der zweite Widerstand ist mit dem Anschluss dem ersten Knotenpunkt gegenüberliegend über einen Transistor an eine Anschlussklemme, insbesondere die Anschlussklemme des negativen Potentials, der Spannungsversorgung des mindestens einen Sensorelements angeschlossen. Dabei ist der Gate-/Basisanschluss dieses Transistors, insbesondere eines Mos-FETs, jeweils mit dem Ausgang des jeweiligen Komparators verbunden. Hierdurch wird ein Hystereseeffekt beim Umschalten des jeweiligen Komparators erzeugt. Der erste und zweite Widerstand der beiden Hystereseschaltungen weisen besonders bevorzugt jeweils paarweise einen zueinander unterschiedlichen Temperaturkoeffezienten auf, wodurch bestimmte Temperatureinflüsse bezüglich des zumindest einen Sensorelements auf das Schaltverhalten der Hystereseschaltungen vermieden werden können. Ganz besonders bevorzugt ist jeweils der erste Widerstand der beiden Hystereseschaltungen ein im Wesentlichen temperaturunabhängiger Widerstand und der jeweils zweite Widerstand weist einen definierten, positiven oder negativen Temperaturkoeffizienten auf, insbesondere je nach Temperaturkoeffizient der Ausgangssignalamplitude des Sensorelements. Durch diese Auslegung der Spannungsteiler bzw. der Widerstände kann gewährleistet werden, dass die Amplitudendifferenz zwischen den beiden Ausgangssignalen des wenigstens einen Sensorelements auch bei starker Erwärmung die Hystereseschwelle periodisch immer überschreitet.

Die Auswerteschaltung weist bevorzugt zusätzlich eine Schnittstellenschaltung zur Einstellung eines definierten Ausgangssignals des Sensors auf, wobei diese Schnittstellenschaltung von der Schaltereinrichtung in Abhängigkeit des jeweiligen Betriebsmodus und/oder in Abhängigkeit des Ausgangs mindestens einer Reseteinrichtung angesteuert wird. Die Schnittstellenschaltung umfasst insbesondere zumindest einen Stromspiegel und/oder eine oder mehrere Stromquellen zur Einstellung eines definierten Strompegels des Sensorausgangssignals.

Es ist zweckmäßig, dass die Schaltereinrichtung den Schaltungszweig der Schnittstellenschaltung, welcher zur Modulation des Sensorausgangssignals durch die Signalverarbeitungseinheit dient, in einem ersten Fall, definiert durch ein Vorliegen einer Betriebsspannung der Auswerteschaltung unterhalb einer definierten Spannungsschwelle und einer Polung der an den Sensor angelegten Versorgungsspannung entsprechend dem Normalbetriebsmodus, und in einem zweiten Fall, definiert durch ein Vorliegen einer Betriebsspannung der Auswerteschaltung oberhalb einer definierten Spannungsschwelle und einer Polung der an den Sensor angelegten Versorgungsspannung entsprechend einem Sonderbetriebsmodus, mittels eines Schalters der Schnittstellenschaltung ausschaltet und/oder ausgeschaltet lässt und ansonsten, also bei Nicht-Vorliegen obig definierter beider Fälle, anschaltet und/oder angeschaltet lässt. Hierdurch kann eine Unterspannung im Normalbetriebsmodus sowie eine Überspannung im Sonderbetriebsmodus durch ein Abschalten der Modulation des Sensorausgangssignals angezeigt bzw. von einer elektronischen Kontrolleinheit erkannt werden.

Es ist zweckmäßig, dass die Auswerteschaltung zusätzlich eine Spannungsstabilisierungseinheit, insbesondere realisiert durch einen Shunt-Regler, besonders bevorzugt durch eine Zener-Diode, zur Stabilisierung der Versorgungsspannung des mindestens einen Sensorelements und/oder eine Stromquelle, welche im Wesentlichen einen Referenzstrom zur Bildung eines Sensorausgangsstromsignals treibt, und/oder eine Referenzspannungseinheit zur Bereitstellung einer Referenzspannung, wobei diese Referenzspannung insbesondere der Signalverarbeitungseinheit, besonders bevorzugt den Operationsverstärkern der Signalverarbeitungseinheit, der Stromquelle und der Spannungsstabilisierungseinheit zur Verfügung gestellt wird, aufweist.

Es ist bevorzugt, dass der Sensor ein Raddrehzahlsensor ist und entsprechend ausgelegt ist.

Es ist zweckmäßig dass der Sensor zumindest teilweise als integrierte Schaltung, insbesondere als ASIC, ausgebildet ist.

Vorzugsweise ist der komplette Sensor, insbesondere bestimmte Teile wie die Sensorelemente und/oder die Auswerteschaltung und das Umschaltmodul auf einem Chip integriert.

Für die Ausbildung des Sensors als Raddrehzahlsensor weist dieser zweckmäßigerweise einen Testbetriebsmodus auf, wobei der Sensor in einem solchen Testbetriebsmodus beispielsweise mit einer Versorgungsspannung von 3V bis 4V arbeitet. Solch ein Testbetriebsmodus dient insbesondere dazu, den korrekten Einbau des Sensors in einer Raddrehzahlsensoranordnung eines Kraftfahrzeugs zu überprüfen. Dabei senkt man die Versorgungsspannung des Sensors so lange ab bis das Sensorsignal ausbleibt. Die Spannung, bei der kein Sensorsignal mehr auftritt beziehungsweise der Sensor Encoderbewegungen nicht mehr erfassen und das entsprechende Signal nicht mehr übertragen kann, ist ein Maß für die Einbauqualität des Sensors und lässt Rückschlüsse auf die Länge des magnetischen Luftspalts zwischen Encoder und Sensorelement und die entsprechende Luftspaltreserve im Normalbetriebsmodus zu.

Bezüglich des Verfahrens ist es bevorzugt, den Sensor durch Umpolen der Versorgungsspannung von dem Normalbetriebsmodus in einen Testbetriebsmodus zur Bestimmung des Luftspalts zwischen einem Encoder und dem Sensor bzw. dem zumindest einen Sensorelement umzuschalten. Danach wird die Versorgungsspannung ausgehend von einem definierten Spannungswert solange verringert, bis der Sensor kein durch die Encoderbewegungen moduliertes Ausgangssignal mit einer definierten Mindestamplitude mehr liefert. Hierdurch kann die oben beschriebene Einbauqualität des Sensors bewertet bzw. die Luftspaltlänge zwischen Encoder und Sensorelement erfasst werden.

Alternativ vorzugsweise wird das erfindungsgemäße Verfahren weitergebildet, in dem der Sensor durch Umpolen der Versorgungsspannung von dem Normalbetriebsmodus in einen Programmiermodus umgeschaltet wird. Danach werden Daten zur Programmierung und/oder Kalibrierung des Sensors von einer elektronischen Kontrolleinheit an den Sensor übertragen. Diese Art des Umschaltens in einen Programmiermodus ist relativ einfach und robust gegenüber Störungen.

Die Erfindung betrifft auch die Verwendung des erfindungsgemäßen Sensors, insbesondere als Raddrehzahlsensor, in Kraftfahrzeugen.

Der erfindungsgemäße Sensor wird bevorzugt in sicherheitskritischen Einsatzbereichen, insbesondere in Kraftfahrzeugen, verwendet. Dabei wird er besonders bevorzugt zur Erfassung von linearen und/oder rotatorischen Bewegungen verwendet. Ganz besonders bevorzugt wird ein Testbetriebsmodus des Sensors nach Einbau des Sensors in die jeweilige Sensoranordnung, insbesondere beim Hersteller, genutzt, um die Einbauqualität und die Luftspaltreserve beurteilen zu können. Hierdurch kann die Betriebsqualität und -sicherheit von lowcost-Sensoren gesteigert werden, welche über keine Möglichkeit der eigenständigen Erfassung der Luftspaltlänge verfügen.

Weitere bevorzugte Ausführungsformen ergeben sich aus den Unteransprüchen und der nachfolgenden Beschreibung von Ausführungsbeispielen an Hand von Figuren.

Es zeigen in schematischer Darstellung
- Fig. 1: ein Ausführungsbeispiel eines aktiven Sensors als Raddrehzahlsensor,
- Fig. 2: eine beispielhafte Ausführungsform eines Brückengleichrichters, und
- Fig. 3: eine beispielhafte Signalverarbeitungseinheit mit im Wesentlichen temperaturunabhängigen Hystereseschaltungen.

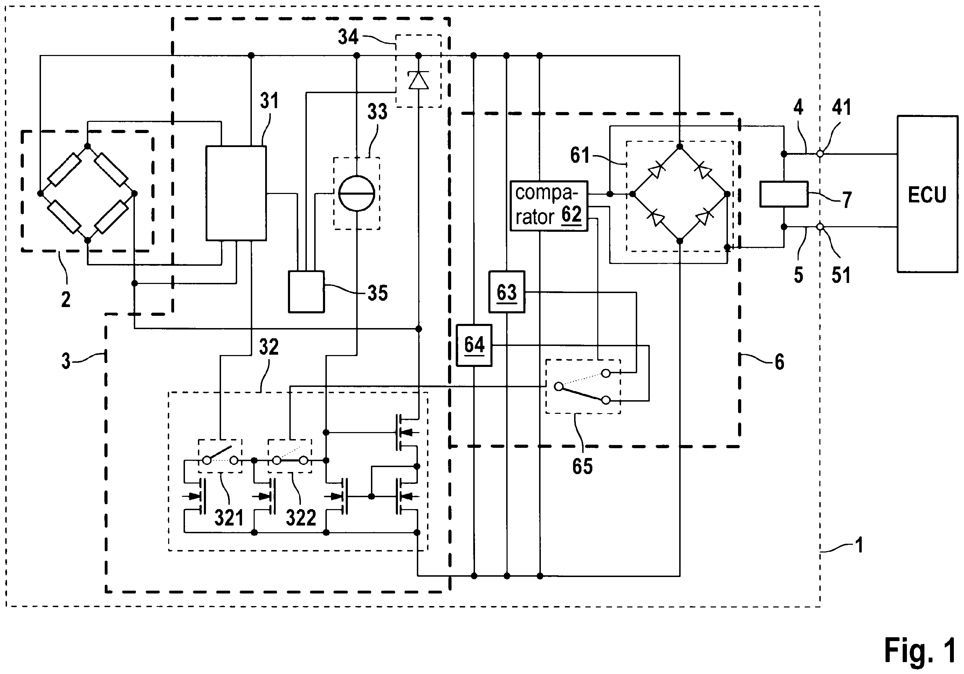

Fig. 1 veranschaulicht einen beispielhaften aktiven Sensor 1, der als Raddrehzahlsensor ausgebildet ist und Anschlussleitungen 4 und 5 mit den Anschlüssen 41 und 51 aufweist, an welche zusätzliche Anschlussleitungen in Verlängerung der Anschlussleitungen 4 und 5 angeschlossen sind. Über diese zusätzlichen Anschlussleitungen ist aktiver Sensor 1 mit der elektronischen Kontrolleinheit ECU eines Kraftfahrzeugbremssystems verbunden. Über Anschlussleitungen 4 und 5 bzw. die Anschlussleitungen 4 und 5 in Verlängerung mit den zusätzlichen Anschlussleitungen werden die Sensorausgangssignale übertragen und die Versorgungsspannung wird an diesen Leitungen 4, 5 bereitgestellt. Durch die Polung der angelegten Versorgungsspannung wird der Betriebsmodus des Sensors 1 eingestellt beziehungsweise umgeschaltet. Bei einer Polung "+" an "+" und "-" an "-" arbeitet der Sensor im Normalbetriebsmodus. Bei einer Polung "+" an "-" und "-" an "+" arbeitet der Sensor in einem Sonderbetriebsmodus bzw. beispielgemäß in einem Testbetriebsmodus. Im normalen Sensorbetrieb liegt der Arbeitsspannungsbereich zwischen 4V und 28V, während im Testbetriebsmodus der Arbeitsspannungsbereich zwischen 3V und 4V liegt. Bei Spannungen größer als 4V befindet sich der Sensor im Testbetriebsmodus in einem Reset-Zustand. Hierdurch wird gewährleistet, dass ein falsches Anschließen des Sensors 1 im Fahrzeug sofort bemerkt wird. Aktiver Sensor 1 umfasst ein Sensorelement 2, welches als AMR-Sensorbrücke ausgebildet ist, eine Auswerteschaltung 3 und ein Umschaltmodul 6. Sensorbrücke 2 erfasst die Rotationsbewegungen eines nicht dargestellten, mit einem Rad fest verbundenen, magnetischen Encoders bzw. das durch die Encoderbewegungen modulierte Magnetfeld. Zusätzlich weist Sensor 1 eine Überspannungsschutzeinheit 7 auf, damit Sensor 1 beim Anschluss an eine zu große Spannung nicht beschädigt wird. Umschaltmodul 6 zur Betriebsmodusumschaltung umfasst Brückengleichrichterschaltung 61, eine erste Komparatorschaltung 62, zwei Reseteinrichtungen 63, 64, welche jeweils bespielgemäß als Komparatoren ausgebildet sind und die Versorgungsspannung der Auswerteschaltung 3 in Bezug zu jeweils einer definierten Spannungsschwelle bzw. Reset-Schwelle bewerten, und zwar einmal ob die Versorgungsspannung der Auswerteschaltung 3 größer als 4V ist und zum anderen mal ob die Versorgungsspannung der Auswerteschaltung 3 kleiner als 4V ist , und eine Schaltereinrichtung 65. Komparatorschaltung 62 ist so mit Brückengleichrichterschaltung 61 verbunden, dass Komparatorschaltung 62 in Abhängigkeit der Polarität der Versorgungsspannung Sensors 1 schaltet oder nicht schaltet bzw. die Polung der Versorgungsspannung Sensors 1 erfasst. Gleichrichterschaltung 61 ist eingangsseitig mit Anschlussleitungen 4 und 5 verbunden und stellt ausgangsseitg eine gleichgerichtete Spannung als Versorgungsspannung für Komparator 62, Reseteinrichtungen 63 und 64, Auswerteschaltung 3 und Sensorelement 2 bereit. Auswerteschaltung 3 umfasst eine Stromquelle, welche ein Stromsignal definierter Amplitude für eine Schnittstellenschaltung 32 bereitstellt. Des Weiteren umfasst Auswerteschaltung 3 eine Signalverarbeitungseinheit 31, welche die Ausgangssignale des Sensorelements 2 verarbeitet und ein digitales Wechselsignal erzeugt und ausgibt, das entsprechend den Encoderbewegungen moduliert ist. Darüber hinaus weist Auswerteschaltung 3 eine Referenzspannungseinheit 35 auf, welche der Signalverarbeitungseinheit 31, der Stromquelle 33 und einer Spannungsstabilisierungseinheit 34 eine Referenzspannung mit definierter Amplitude zur Verfügung stellt. Spannungsstabilisierungseinheit 34 besteht beispielgemäß aus einer Zener-Diode, mit welcher die Versorgungsspannung des Sensorelements 2 und beispielgemäß ebenfalls die Versorgungsspannung der Signalverarbeitungseinheit 31, welche parallel dazu geschaltet ist, auf einen im Wesentlichen konstanten, definierten Wert eingestellt wird. Das Ausgangssignal der Signalverarbeitungseinheit 31 schaltet Schalter 321 der Schnittstellenschaltung 32 in Abhängigkeit der Encoderbewegungen bzw. der Periode des digitalen Ausgangssignals der Signalverarbeitungseinheit 31 ein und aus, wodurch der Verstärkungsfaktor von Schnittstellenschaltung 32 jeweils umgeschaltet wird und in dessen Abhängigkeit die Amplitude des Sensorausgangsstromsignals zwischen zwei definierten Amplitudenwerten variiert wird. Schaltereinrichtung 65 überträgt in Abhängigkeit vom Ausgang der Komparatorschaltung 62 eines der beiden Reset-Signale der Reseteinrichtungen 63 und 64 zu einem Schalter 322 der Schnittstellenschaltung 32. Ist dieser Schalter 322 geöffnet, wird das durch die Encoderbewegungen modulierte Ausgangssignal von Signalverarbeitungseinrichtung 31 ausgeschaltet bzw. nicht weitergeleitet. Dieser Aufbau hat den Vorteile, dass ein Unterspannungsreset im Normalbetriebsmodus ausgeführt werden kann, bei welchem insbesondere Signalverarbeitungseinrichtung 31 das Sensorausgangssignal nicht getaktet moduliert bzw. diese 31 ein definiertes, gleich bleibendes Sensorausgangssignal mit einer geringen Amplitude an die ECU überträgt. Zusätzlich kann ein Überspannungsreset im Testbetriebsmodus durchgeführt werden, bei welchem insbesondere oben genannte Maßnahmen ebenfalls durchgeführt werden. Außerdem beinhaltet oben beschriebener Aufbau einen Verpolschutz.

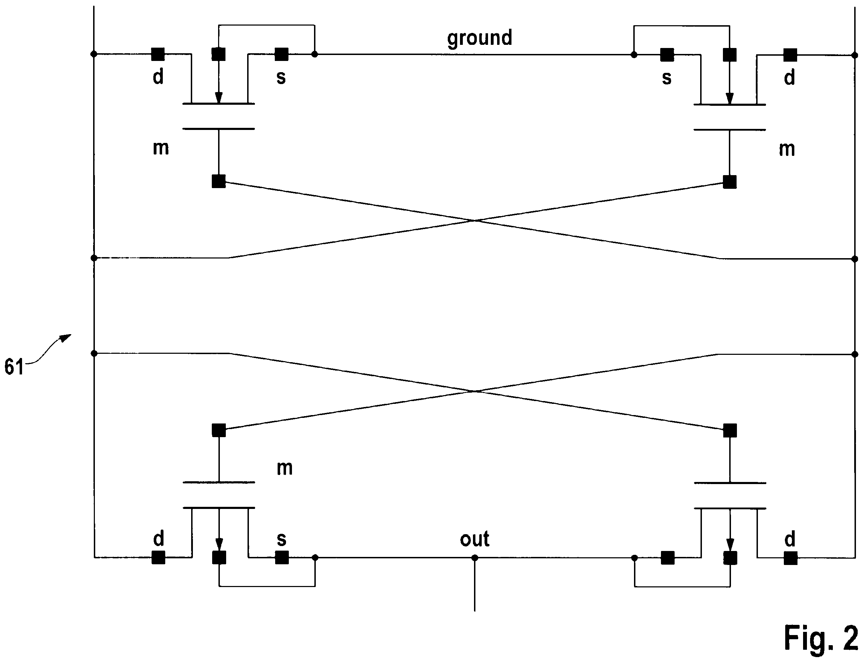

In Fig. 2 ist ein Ausführungsbeispiel einer Brückengleichrichterschaltung 61 dargestellt. Bei einer üblichen Brückengleichrichterschaltung mit vier Dioden fällt an zwei Dioden eine definierte Spannung ab, welche auch als Diodendrop bezeichnet wird. Die der Auswerteschaltung 3 zur Verfügung stehende Arbeitsspannung ergibt sich somit im Wesentlichen aus der Versorgungsspannung Sensors 1 abzüglich zweimal des Spannungsabfalls am p-n-Übergang einer Diode (~ 0,6V bis 0,8V). Da die Arbeitsspannung im normalen Betrieb bei minimal 4V liegen kann, würde die Auswerteschaltung in diesem Fall nur noch mit ungefähr 2,4V betrieben werden. Dies ist unerwünscht, insbesondere deshalb, weil noch weitere interne Spannungsabfälle in Auswerteschaltung 3 auftreten, beispielsweise über Schnittstellenschaltung 32 und somit entsprechend nachgeschalteten Schaltungen und/oder Bauelementen eine noch geringere Arbeitsspannung zur Verfügung stehen. Die in Fig. 2 dargestellte Brückengleichrichterschaltung 61 verwendet Mos-FETs anstatt der Dioden, wodurch der interne Spannungsabfall der Schaltung signifikant verringert werden kann und der Auswerteschaltung 3 somit eine höhere Arbeitsspannung zur Verfügung steht.

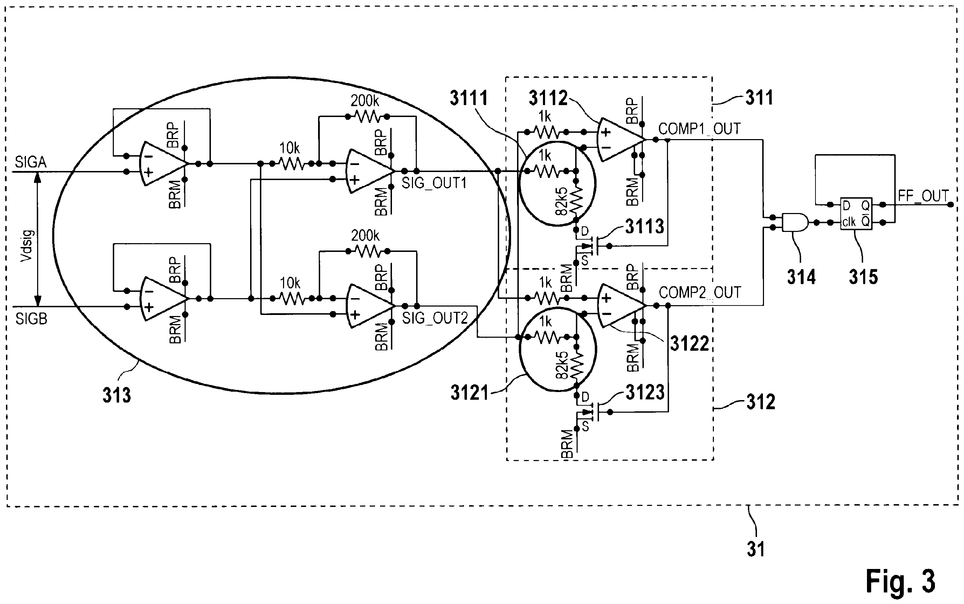

Fig. 3 zeigt eine beispielhafte Signalverarbeitungseinheit 31. An diese sind eingangsseitig die um 180° zueinander phasenverschobenen Sensorelementausgangssignale SIGA und SIGB bzw. deren Spannungsdifferenz Vdsig angeschlossen. Signalverarbeitungseinheit 31 weist eine Verstärkerschaltung 313 mit vier Operationsverstärkern auf. Verstärkerschaltung 313 kann alternativ, gemäß einem nicht dargestellten Ausführungsbeispiel, auch aus mindestens einem Instrumentenverstärker ausgebildet sein. Zusätzlich weist Signalverarbeitungseinheit 31 zwei Hystereseschaltungen 311 und 312, ein UND-Gatter 314 welches eingangsseitig mit den Ausgängen der Hystereseschaltungen 311 und 312 verbunden ist und ein Toggle-Flip-Flop 315, das eingangsseitig mit UND-Gatter 314 verbunden ist, auf. Hystereseschaltungen 311 und 312 umfassen jeweils einen Komparator 3112, 3122, als Operationsverstärker ausgebildet, einen Spannungsteiler 3111, 3121, jeweils mit einem ersten Widerstand 1k und einem zweiten Widerstand 82k5 sowie einen Transistor 3113, 3123. Die Operationsverstärker sind alle gemeinsam an die Spannungsversorgung der Sensorbrücke BRP (Bridge Supply Plus) und BRM (Bridge Supply Minus) angeschlossen.

Magnetfeldsensorelemente, insbesondere magnetoresistive Sensorelemente, haben unter anderem die Eigenschaft, dass mit zunehmender Temperatur die Signalamplitude geringer wird. Deshalb ist es wünschenswert, bei der Umwandlung von analogen in digitale Signale, die Schalthysterese über die Temperatur der Signalspannung anzupassen. Dies geschieht über die, die Hysterese bestimmenden, Spannungsteiler 3111 bzw. 3121, deren beide Widerstände aus unterschiedlichen Materialien mit unterschiedlichen Temperaturkoeffizienten ausgebildet sind. Durch entsprechende Dimensionierung lässt sich die Temperaturabhängigkeit der Hysteresespannung an die Temperaturabhängigkeit der Signalspannung anpassen. Außerdem weist Signalverarbeitungseinrichtung 31 bzw. deren Hystereseschaltungen 311 und 312 eine asymmetrische Hysterese bezüglich der beiden Komparatoren 3112, 3122 auf. Diese Komparatoren 3112, 3122 schalten jeweils beim Nulldurchgang bzw. dem Kreuzungspunkt der Amplituden der beiden Ausgangssignale der Verstärkerschaltung 313 SIG_OUT1 und SIG_OUT2, woraus ein vom übrigen Signalverlauf dieser beiden Signale unabhängiges Schalten der beiden Komparatoren 3112 und 3122 resultiert. Komparator 3112 schaltet beispielsweise jeweils bei einer Änderung der Polung der an seinen Klemmen anliegenden Differenzspannung. Übersteigt die Amplitude von SIG_OUT2 (liegt an "+" von Komparator 3112 an) die Amplitude von SIG-OUT1 (liegt an "-" von Komparator 3112 an), so stellt sich am Ausgang von Komparator 3112 eine "1" bzw. ein high-Signal ein. Diese "1" schaltet Transistor 3113, in diesem Fall ein Mos-FET, durch, worauf sich an den Widerständen 1k und 82k5 jeweils eine Spannung, sich ergebend aus der Spannung von SIG_OUT1 und entsprechend den Widerstandswerten des Spannungsteilers 3111, einstellt. Durch das Durchschalten von Mos-FET 3113 liegt an der dem Komparator gegenüberliegenden Klemme des Widerstandes 82k5 das Potential BRM (Bridge Supply Minus) an, welches das negative Potential der Versorgungsspannung der Magnetfeldsensorbrücke ist. Hierdurch wird das am invertierenden Eingang des Komparators 3112 anliegende Potential negativer. Für ein Umschalten des Komparators auf ein "0"-Ausgangssignal reicht dem entsprechend nicht der Anstieg der Amplitude von SIG_OUT1 auf den Wert der Amplitude von SIG_OUT2 , weil SIG_OUT 2 aufgrund des aktivierten Spannungsteilers nicht voll am invertierenden Eingangs Komparators K1 anliegt. Diese Hysterese würde im Fall einer höheren Temperatur der Magnetfeldsensorbrücke, woraus eine im Allgemeinen geringere Amplitude der Signale SIG_OUT1 und SIG_OUT 2 resultiert, dazu führen, dass ein Umschalten Komparators 3112 deutlich später als bei einer durchschnittlichen Temperatur oder ab einer bestimmten Temperatur gar nicht mehr stattfinden würde, weil der maximale Amplitudenunterschied zwischen SIG_OUT 2 und dem Anteil von SIG_OUT1, welcher am invertierenden Eingang von Komparator 1 anliegt, geringer wäre als die Hystereseschwelle. Aus diesem Grund weisen die Widerstände 1k und 82k5 des Spannungsteilers einen unterschiedlichen Temperaturkoeffizienten auf. In diesem Ausführungsbeispiel ist Widerstand 1k im Wesentlichen unabhängig von der Temperatur ausgelegt und Widerstand 82k5 weist einen positiven Temperaturkoeffizienten auf, um den beispielgemäß negativen Temperaturkoeffizienten des Amplitudenverlaufs der Sensorelementbrücke auszugleichen. Dadurch liegt an Widerstand 82k5 bei steigender Temperatur eine höhere Spannung und ein im Verhältnis höheres Potential am invertierenden Eingang ("-") Komparators 3112 an. Hierdurch wird gewährleistet, dass die Amplitudendifferenz zwischen SIG_OUT 2 und dem Anteil von SIG_OUT1, welcher am invertierenden Eingang von Komparator 3112 anliegt, auch bei relativ starker Erwärmung die Hystereseschwelle periodisch überschreitet. Die Funktionsweise der Hystereseschaltung 312 ist entsprechend und bezüglich der Signale SIG_OUT1 und SIG_OUT 2 invertierend zum Schaltungszweig des Komparators K1. Die Ausgangssignale der Hystereseschaltungen 311 und 312 überlappen sich bezüglich des High-Levels bzw. des Zustands "1" aufgrund der Hysterese, weil die negative Flanke des einen Signals später kommt, als die positive Flanke des anderen Signals, wodurch sich an UND-Gatter 314 ausgangsseitig für jede Periode eine "1" bzw. eine positive Flanke ergibt. Als Ausgangssignal der Signalverarbeitungsseinrichtung 31 ergibt sich somit ein im Wesentlichen rechteckförmiges Wechselsignal, dessen Periode mit der Bewegungsgeschwindigkeit bzw. Drehzahl des Encoders korreliert und dessen Flanken zeitlich mit den Nulldurchgängen des Eingangssignals korrelieren.

## Patentansprüche

1. Aktiver Sensor (1) zum Umschalten in einen Sonderbetriebsmodus, wobei der Sensor (1) mindestens ein Sensorelement (2), eine Auswerteschaltung (3) und zwei Anschlussleitungen (4, 5) mit jeweils einem Anschluss (41, 51) zur Übertragung der sensorischen Information aufweist, wobei über die Anschlussleitungen (4, 5) die Sensorausgangssignale übertragen werden und wobei an diesen beiden Anschlussleitungen die Versorgungsspannung des Sensors (1) anliegt, wobei der Sensor (1) ein Umschaltmodul (6) umfasst, mit dem zwischen einem Normalbetriebsmodus und einem Sonderbetriebsmodus durch Umpolen der an den zwei Anschlüssen anliegenden Versorgungsspannung umgeschaltet werden kann, wobei das Umschaltmodul (6) eine Gleichrichterschaltung (61) aufweist, welche eingangsseitig mit den beiden Anschlussleitungen (4, 5) verbunden ist.

2. Sensor (1) nach Anspruch 1, **dadurch gekennzeichnet, dass** das Umschaltmodul (6) eine Brückengleichrichterschaltung als Gleichrichterschaltung aufweist, welche eingangsseitig mit den beiden Anschlussleitungen (4, 5) verbunden ist.

3. Sensor (1) nach Anspruch 2, **dadurch gekennzeichnet, dass** die Gleichrichterschaltung (61) als Brückengleichrichterschaltung mit vier Mos-FETs ausgebildet ist.

4. Sensor (1) nach mindestens einem der Ansprüche 1 bis 3, **dadurch gekennzeichnet, dass** das Umschaltmodul (6) zumindest eine erste Komparatorschaltung (62) zur Identifikation der Polung der Versorgungsspannung aufweist, wobei die erste Komparatorschaltung (62) eingangsseitig mit den beiden Anschlussleitungen (4, 5) direkt oder indirekt verbunden ist.

5. Sensor (1) nach Anspruch 4, **dadurch gekennzeichnet, dass** die Energieversorgungsanschlüsse der ersten Komparatorschaltung (62) und/oder der Auswerteschaltung (3) mit den Ausgangsanschlüssen der Gleichrichterschaltung (61) verbunden sind.

6. Sensor (1) nach mindestens einem der Ansprüche 1 bis 5 **dadurch gekennzeichnet, dass** das Umschaltmodul (6) zur Bewertung seiner eigenen Betriebsspannung und/oder der Betriebsspannung der Auswerteschaltung (3) bezüglich wenigstens einer definierten Spannungsschwelle mindestens eine Reseteinrichtung (63, 64) aufweist.

7. Sensor (1) nach mindestens einem der Ansprüche 4 bis 6, **dadurch gekennzeichnet, dass** das Umschaltmodul (6) eine Schaltereinrichtung (65) zum Umschalten des Betriebsmodus aufweist, welche in Abhängigkeit des Ausgangs der ersten Komparatorschaltung (62) zur Identifikation der Polung der Versorgungsspannung
eines der beiden Reset-Signale der Reseteinrichtungen (63, 64) zu einem Schalter (322) der Schnittstellenschaltung (32) überträgt.

8. Sensor (1) nach mindestens einem der Ansprüche 1 bis 7, **dadurch gekennzeichnet, dass** die Auswerteschaltung (3) eine Signalverarbeitungseinheit (31) umfassend zwei Hystereseschaltungen (311, 312) aufweist, in denen ein erstes und ein zweites Ausgangssignal (SIGA, SIGB) des mindestens einen Sensorelements (2) verarbeitet werden, wobei diese beiden Hystereseschaltungen (311, 312) parallel geschaltet sind und jeweils zumindest einen Komparator (3112, 3122) umfassen, wobei das erste und das zweite Ausgangssignal (SIGA, SIGB) des wenigstens einen Sensorelements (2) jeweils an den Eingängen der beiden Komparatoren (3112, 3122) bezüglich des nichtinvertierenden und des invertierenden Eingangs zueinander vertauscht anliegen.

9. Sensor (1) nach Anspruch 8, **dadurch gekennzeichnet, dass** jeweils an den invertierenden Eingang der beiden Komparatoren (3112,3122) der Hystereseschaltungen (311, 312) ein Spannungsteiler (3111, 3121), bestehend aus einem ersten und einem zweiten Widerstand an einem ersten Knotenpunkt zwischen diesen beiden Widerständen, angeschlossen ist und dass der erste Widerstand mit dem Anschluss diesem ersten Knotenpunkt gegenüberliegend an die Signalleitung des entsprechenden ersten oder zweiten Ausgangssignals des mindestens einen Sensorelements (2) angeschlossen ist und dass der zweite Widerstand mit dem Anschluss dem ersten Knotenpunkt gegenüberliegend über einen Transistor (3113, 3123) an eine Anschlussklemme, insbesondere die Anschlussklemme des negativen Potentials, der Spannungsversorgung des mindestens einen Sensorelements (2) angeschlossen ist und dass der Gate-/Basisanschluss dieses Transistors (3113, 3123) mit dem Ausgang des jeweiligen Komparators (3112,3122) verbunden ist, wodurch ein Hystereseffekt beim Umschalten des jeweiligen Komparators (3112,3122) erzeugt wird.

10. Sensor (1) nach Anspruch 9, **dadurch gekennzeichnet, dass** der erste und der zweite Widerstand der beiden Hystereseschaltungen (311, 312) jeweils paarweise einen zueinander unterschiedlichen Temperaturkoeffizienten aufweisen.

11. Sensor (1) nach Anspruch 9 oder 10, **dadurch gekennzeichnet, dass** jeweils der erste Widerstand der beiden Hystereseschaltungen (311, 312) ein im Wesentlichen temperaturunabhängiger Widerstand ist und der jeweils zweite Widerstand ein Widerstand mit einem definierten, positiven oder negativen Temperaturkoeffizienten ist.

12. Sensor (1) nach mindestens einem der Ansprüche 7 bis 11, **dadurch gekennzeichnet, dass** die Auswerteschaltung (3) eine Schnittstellenschaltung (32) zur Einstellung eines definierten Ausgangssignals der Sensors (3) umfasst und diese Schnittstellenschaltung (32) von der Schaltereinrichtung (65) in Abhängigkeit des jeweiligen Betriebsmodus angesteuert wird.

13. Sensor (1) nach Anspruch 12, **dadurch gekennzeichnet, dass** die Schaltereinrichtung (65) den Schaltungszweig der Schnittstellenschaltung (321), welcher zur Modulation des Sensorausgangssignals durch die Signalverarbeitungseinheit (31) dient, in einem ersten Fall, bei Vorliegen einer Betriebsspannung der Auswerteschaltung (3) unter einer definierten Spannungsschwelle und einer Polung der an den Sensor (1) angelegten Versorgungsspannung entsprechend dem Normalbetriebsmodus, und in einem zweiten Fall, bei Vorliegen einer Betriebsspannung der Auswerteschaltung (3) über einer definierten Spannungsschwelle und einer Polung der an den Sensor angelegten Versorgungsspannung entsprechend einem Sonderbetriebsmodus, mittels eines Schalters (322) der Schnittstellenschaltung (32) ausschaltet und/oder ausgeschaltet lässt und ansonsten anschaltet und/oder angeschaltet lässt.

14. Verfahren zur Ansteuerung eines aktiven Sensors gemäß mindestens einem der Ansprüche 1 bis 13, wobei der Sensor (1) mindestens ein Sensorelement (2), eine Auswerteschaltung (3) und zwei Anschlussleitungen (4, 5) mit jeweils einem Anschluss (41, 51) zur Übertragung der sensorischen Information aufweist, wobei über die Anschlussleitungen (4, 5) die Sensorausgangssignale übertragen werden und wobei der Sensor (1) in zumindest zwei Betriebsmodi betrieben werden kann und mittels der beiden Anschlussleitungen (4, 5) sowohl angesteuert als auch mit Energie versorgt wird, **dadurch gekennzeichnet, dass**
zwischen einem Normalbetriebsmodus und einem Sonderbetriebsmodus durch Umpolen der an den beiden Anschlussleitungen (4, 5) anliegenden Versorgungsspannung umgeschaltet wird, wobei
das Umschaltmodul (6) eine Gleichrichterschaltung (61) aufweist, welche eingangsseitig mit den beiden Anschlussleitungen (4, 5) verbunden ist.

15. Verfahren nach Anspruch 14, **dadurch gekennzeichnet, dass** der Sensor (1) durch Umpolen der Versorgungsspannung von dem Normalbetriebsmodus in einen Testbetriebsmodus zur Bestimmung des Luftspalts zwischen einem Encoder und dem Sensor (1) umgeschaltet wird, wonach die Versorgungsspannung ausgehend von einem definierten Spannungswert solange verringert wird, bis der Sensor kein durch die Encoderbewegungen moduliertes Ausgangssignal mit einer definierten Mindestamplitude mehr liefert.

16. Verfahren nach Anspruch 14, **dadurch gekennzeichnet, dass** der Sensor (1) durch Umpolen der Versorgungsspannung von dem Normalbetriebsmodus in einen Programmiermodus umgeschaltet wird, wonach Daten zur Programmierung und/oder Kalibrierung des Sensors (1) von einer elektronischen Kontrolleinheit (ECU) an den Sensor (1) übertragen werden.

17. Verwendung eines Sensors gemäß mindestens einem der Ansprüche 1 bis 13, insbesondere als Raddrehzahlsensor, in Kraftfahrzeugen.

## Claims

1. Active sensor (1) for switching over into a special operating mode, wherein the sensor (1) has at least one sensor element (2), one evaluation circuit (3) and two connecting lines (4, 5), each with a terminal (41, 51) for transmitting the sensor information, wherein the sensor output signals are transmitted via the connecting lines (4, 5) and wherein the supply voltage of the sensor (1) is applied to these two connecting lines, wherein
the sensor (1) comprises a switchover module (6) with which it is possible to switch over between a normal operating mode and a special operating mode by reversing the polarity of the supply voltage which is applied to the two terminals, wherein the switchover module (6) has a rectifier circuit (61) which is connected on the input side to the two connecting lines (4, 5).

2. Sensor (1) according to Claim 1, **characterized in that** the switchover module (6) has a bridge rectifier circuit as rectifier circuit which is connected on the input side to the two connecting lines (4, 5).

3. Sensor (1) according to Claim 2, **characterized in that** the rectifier circuit (61) is embodied as a bridge rectifier circuit with four Mos-FETs.

4. Sensor (1) according to at least one of Claims 1 to 3, **characterized in that** the switchover module (6) has at least a first comparator circuit (62) for identifying the polarity of the supply voltage, wherein the first comparator circuit (62) is directly or indirectly connected on the input side to the two connecting lines (4, 5).

5. Sensor (1) according to Claim 4, **characterized in that** the power supply terminals of the first comparator circuit (62) and/or of the evaluation circuit (3) are connected to the output terminals of the rectifier circuit (61).

6. Sensor (1) according to at least one of Claims 1 to 5, **characterized in that** the switchover module (6) has at least one reset device (63, 64) for evaluating its own operating voltage and/or the operating voltage of the evaluation circuit (3) with respect to at least one defined voltage threshold.

7. Sensor (1) according to at least one of Claims 4 to 6, **characterized in that** the switchover module (6) has a switch device (65) for switching over the operating mode, which switch device (65) transmits one of the two reset signals of the reset devices (63, 64) to a switch (322) of the interface circuit (32) as a function of the output of the first comparator circuit (62) for identifying the polarity of the supply voltage.

8. Sensor (1) according to at least one of Claims 1 to 7, **characterized in that** the evaluation circuit (3) has a signal processing unit (31) comprising two hysteresis circuits (311, 312) in which a first and a second output signal (SIGA, SIGB) of the at least one sensor element (2) are processed, wherein these two hysteresis circuits (311, 312) are connected in parallel and each comprise at least one comparator (3112, 3122), wherein the first and second output signals (SIGA, SIGB) of the at least one sensor element (2) are each applied to the inputs of the two comparators (3112, 3122) interchanged with one another with respect to the non-inverting input and the inverting input.

9. Sensor (1) according to Claim 8, **characterized in that** a voltage divider (3111, 3121) is connected to each of the inverting inputs of the two comparators (3112, 3122) of the hysteresis circuits (311, 312), said voltage divider (3111, 3121) being composed of a first and a second resistor at a first node between these two resistors, and **in that** the first resistor is connected by the terminal, opposite this first node, to the signal line of the corresponding first or second output signal of the at least one sensor element (2) and **in that** the second resistor is connected by the terminal, opposite the first node, to a connecting terminal, in particular the connecting terminal of the negative potential, of the supply voltage of the at least one sensor element (2), via a transistor (3113, 3123), and **in that** the gate/base terminal of this transistor (3113, 3123) is connected to the output of the respective comparator (3112, 3122), as a result of which a hysteresis effect is produced when the respective comparator (3112, 3122) is switched over.

10. Sensor (1) according to Claim 9, **characterized in that** the first and second resistors of the two hysteresis circuits (311, 312) have, in each case on a paired basis, temperature coefficients which are different from one another.

11. Sensor (1) according to Claim 9 or 10, **characterized in that** in each case the first resistor of the two hysteresis circuits (311, 312) is an essentially temperature-independent resistor and the respective second resistor is a resistor with a defined, positive or negative temperature coefficient.

12. Sensor (1) according to at least one of Claims 7 to 11, **characterized in that** the evaluation circuit (3) comprises an interface circuit (32) for setting a defined output signal of the sensor (3), and this interface circuit (32) is actuated by the switch device (65) as a function of the respective operating mode.

13. Sensor (1) according to Claim 12, **characterized in that** the switch device (65) switches off and/or leaves switched off the circuit branch of the interface circuit (321) which is used to modulate the sensor output signal by means of the signal processing unit (31), in a first case when there is an operating voltage for the evaluation circuit (3) below a defined threshold voltage and the polarity of the supply voltage which is applied to the sensor (1) corresponds to the normal operating mode, and in a second case when there is an operating voltage of the evaluation circuit (3) above a defined threshold voltage and the polarity of the supply voltage which is applied to the sensor corresponds to a special operating mode, by means of a switch (322) of the interface circuit (32), and otherwise switches on and/or leaves switched on said circuit branch.

14. Method for actuating an active sensor according to at least one of Claims 1 to 13, wherein the sensor (1) has at least one sensor element (2), an evaluation circuit (3) and two connecting lines (4, 5), each with a terminal (41, 51) for transmitting the sensor information, wherein the sensor output signals are transmitted via the connecting lines (4, 5) and wherein the sensor (1) can be operated in at least two operating modes and is both actuated and supplied with energy by means of the two connecting lines (4, 5), **characterized in that** switching over is carried out between a normal operating mode and a special operating mode by reversing the polarity of the supply voltage applied to the two connecting lines (4, 5), wherein the switchover module (6) has a rectifier circuit (61) which is connected on the input side to the two connecting lines (4, 5).

15. Method according to Claim 14, **characterized in that** in order to determine the air gap between an encoder and the sensor (1) said sensor (1) is switched over from the normal operating mode into a test operating mode by reversing the polarity of the supply voltage, after which the supply voltage is reduced, starting from a defined voltage value, until the sensor no longer supplies an output signal which is modulated by the encoder movements and has a defined minimum amplitude.

16. Method according to Claim 14, **characterized in that** the sensor (1) is switched over from the normal operating mode into a programming mode by reversing the polarity of the supply voltage, after which data for programming and/or calibrating the sensor (1) is transmitted from an electronic control unit (ECU) to the sensor (1).

17. Use of a sensor according to at least one of Claims 1 to 13, in particular as a wheel speed sensor, in motor vehicles.

## Revendications

1. Capteur actif (1) destiné à effectuer un basculement sur un mode de fonctionnement particulier, dans lequel le capteur (1) comporte au moins un élément de capteur (2), un circuit d'évaluation (3) et deux lignes de connexion (4, 5) ayant chacune une borne (41, 51) pour transmettre des informations de capteurs, dans lequel les signaux de sortie de capteurs sont transmis par l'intermédiaire des lignes de connexion (4, 5) et dans lequel la tension d'alimentation du capteur (1) est appliquée auxdites deux lignes de connexion, dans lequel le capteur (1) comprend un module de basculement (6) au moyen duquel un basculement peut être effectué entre un mode de fonctionnement normal et un mode de fonctionnement particulier par inversion de polarité de la tension d'alimentation appliquée aux deux bornes, dans lequel le module de basculement (6) comporte un circuit redresseur (61) qui est relié en entrée aux deux lignes de connexion (4, 5).

2. Capteur selon la revendication 1, **caractérisé en ce que** le module de basculement (6) comporte, en tant que circuit redresseur, un circuit redresseur en pont qui est relié en entrée aux deux lignes de connexion (4, 5).

3. Capteur (1) selon la revendication 2, **caractérisé en ce que** le circuit redresseur (61) est réalisé sous la forme d'un circuit redresseur en pont à quatre transistors Mos-FET.

4. Capteur (1) selon au moins l'une des revendications 1 à 3, **caractérisé en ce que** le module de basculement (6) comporte au moins un premier circuit comparateur (62) destiné à identifier la polarité de la tension d'alimentation, dans lequel le premier circuit comparateur (62) est directement ou indirectement relié en entrée aux deux lignes de raccordement (4, 5).

5. Capteur (1) selon la revendication 4, **caractérisé en ce que** les bornes d'alimentation en énergie du premier circuit comparateur (62) et/ou du circuit d'évaluation (3) sont reliées aux bornes de sortie du circuit redresseur (61).

6. Capteur (1) selon au moins l'une des revendications 1 à 5, **caractérisé en ce que** le module de basculement (6) comporte au moins un circuit de réinitialisation (63, 64) pour évaluer sa tension de fonctionnement propre et/ou la tension de fonctionnement du circuit d'évaluation (3) par rapport à au moins un seuil de tension défini.

7. Capteur (1) selon au moins l'une des revendications 4 à 6, **caractérisé en ce que** le module de commutation (6) comporte, pour le basculement du mode de fonctionnement, un dispositif commutateur (65) qui transmet à un commutateur (322) du circuit d'interface (32) l'un des deux signaux de réinitialisation des dispositifs de réinitialisation (63, 64) en fonction de la sortie du premier circuit comparateur (62) afin d'identifier la polarité de la tension d'alimentation.

8. Capteur (1) selon au moins l'une des revendications 1 à 7, **caractérisé en ce que** le circuit d'évaluation (3) comporte une unité de traitement de signal (31) comprenant deux circuits à hystérésis (311, 312) dans lesquels sont traités des premier et deuxième signaux de sortie (SIGA, SIGB) de l'au moins un élément capteur (2), dans lequel lesdits deux circuits à hystérésis (311, 312) sont connectés en parallèle et comprennent respectivement au moins un comparateur (3112, 3122), dans lequel les premier et deuxième signaux de sortie (SIGA, SIGB) de l'au moins un élément capteur (2) sont respectivement appliquées de manière inverse l'une de l'autre aux entrées des deux comparateurs (3112, 3122), par rapport aux entrées non inverseuse et inverseuse.

9. Capteur (1) selon la revendication 8, **caractérisé en ce qu'**un diviseur de tension (3111, 3121), constitué de première et deuxième résistances au niveau d'un premier noeud entre lesdites deux résistances, est raccordé à l'entrée inverseuse des deux comparateurs (3112, 3122) des circuits à hystérésis (311, 312) et **en ce que** la première résistance est connectée à la borne opposée audit premier noeud au niveau de la ligne de signal du premier ou du deuxième signal de sortie correspondant de l'au moins un élément capteur (2) et **en ce que** la deuxième résistance est connectée à la borne opposée au premier noeud par l'intermédiaire d'un transistor (3113, 3123), au niveau d'une borne de connexion, notamment la borne de connexion du potentiel négatif de l'alimentation en tension de l'au moins un élément capteur (2) et **en ce que** la borne de grille/base dudit transistor (3113, 3123) est reliée à la sortie du comparateur respectif (3112, 3122), d'où il résulte qu'un effet d'hystérésis est généré lors du basculement du comparateur (3112, 3122) respectif.

10. Capteur (1) selon la revendication 9, **caractérisé en ce que** les première et deuxième résistances des deux circuits à hystérésis (311, 312) présentent respectivement des coefficients de température différents par paires l'un de l'autre.

11. Capteur (1) selon la revendication 9 ou 10, **caractérisé en ce que** la première résistance des deux circuits à hystérésis (311, 312) est une résistance sensiblement indépendante de la température et **en ce que** la deuxième résistance est respectivement une résistance ayant un coefficient de température défini, positif ou négatif.

12. Capteur (1) selon au moins l'une des revendications 7 à 11, **caractérisé en ce que** le circuit d'évaluation (3) comprend un circuit d'interface (32) destiné à régler un signal de sortie défini du capteur (3) et **en ce que** ledit circuit d'interface (32) est commandé par le dispositif à commutateur (65) en fonction du mode de fonctionnement respectif.

13. Capteur (1) selon la revendication 12, **caractérisé en ce que** le dispositif à commutateur (65) désactive et/ou rend désactivée la branche de commutation du circuit d'interface (321) qui est utilisé pour moduler le signal de sortie de capteur par l'intermédiaire de l'unité de traitement de signal (31), dans un premier cas, lors de l'application d'une tension de fonctionnement du circuit d'évaluation (3) inférieure à un seuil de tension défini et pour une polarité de la tension d'alimentation appliquée au capteur (1) correspondant au mode de fonctionnement normal et, dans un deuxième cas, lors de l'application d'une tension de fonctionnement du circuit d'évaluation (3) supérieure à un seuil de tension défini et pour une polarité de la tension d'alimentation appliquée au capteur correspondant à un mode de fonctionnement particulier, au moyen d'un commutateur (322) du circuit d'interface (32) et, dans le cas contraire, active et/ou rend activée ladite branche de commutation.

14. Procédé de commande d'un capteur actif selon au moins l'une des revendications 1 à 13, dans lequel le capteur (1) comporte au moins un élément capteur (2), un circuit d'évaluation (3) et deux lignes de connexion (4, 5) ayant respectivement une borne (41, 51) pour transmettre des informations de capteurs, dans lequel les signaux de sortie de capteurs sont transmis par l'intermédiaire des lignes de connexion (4, 5) et dans lequel le capteur (1) peut être mis en fonctionnement dans au moins deux modes de fonctionnement et peut à la fois être commandé et alimenté en énergie par l'intermédiaire des deux lignes de connexion (4, 5),
**caractérisé en ce qu'**un basculement est effectué entre un mode de fonctionnement normal et un mode de fonctionnement particulier par inversion de polarité de la tension d'alimentation appliquée aux deux lignes de connexion (4, 5), dans lequel
le module de basculement (6) comporte un circuit redresseur (61) qui est relié en entrée aux deux lignes de connexion (4, 5).

15. Procédé selon la revendication 14, **caractérisé en ce que** le capteur (1) est amené à basculer du mode de fonctionnement normal à un mode de fonctionnement de test par inversion de polarité de la tension d'alimentation pour déterminer l'entrefer entre un codeur et le capteur (1), et la tension d'alimentation est ensuite réduite à partir d'une valeur de tension définie jusqu'à ce que le capteur ne délivre plus de signal de sortie modulé par les mouvements du codeur ayant une amplitude minimale définie.

16. Procédé selon la revendication 14, **caractérisé en ce que** le capteur (1) est amené à basculer du mode de fonctionnement normal à un mode de programmation par inversion de polarité de la tension d'alimentation et **en ce que** des données de programmation et/ou d'étalonnage du capteur (1) sont ensuite transmises d'une unité de commande électronique (ECU) au capteur (1).

17. Utilisation d'un capteur selon au moins l'une des revendications 1 à 13, notamment en tant que capteur de vitesse de rotation de roue, dans des véhicules automobiles.
